Europäisches Patentamt

European Patent Office

Office européen des brevets

(11) Veröffentlichungsnummer: **0 215 728**
**A1**

(12) **EUROPÄISCHE PATENTANMELDUNG**

(21) Anmeldenummer: 86730125.1

(22) Anmeldetag: 12.08.86

(51) Int. Cl.⁴: **H 01 F 40/06**
**H 01 F 27/06**

(30) Priorität: 30.08.85 DE 3531491

(43) Veröffentlichungstag der Anmeldung:
25.03.87 Patentblatt 87/13

(84) Benannte Vertragsstaaten:
CH DE FR GB LI NL SE

�[71] Anmelder: **Siemens Aktiengesellschaft Berlin und
München
Wittelsbacherplatz 2
D-8000 München 2 (DE)**

(72) Erfinder: **Haarhuis, Jürgen
Jahnstrasse 17
D-1000 Berlin 61 (DE)**

**Lorenz, Dieter, Dipl.-Ing.
Gärtnerstrasse 1B
D-1000 Berlin 45 (DE)**

**Schöps, Jürgen
Düsseldorfer Strasse 24
D-1000 Berlin 15 (DE)**

(54) **Metallgekapselte, druckgasisolierte Hochspannungsschaltanlage mit einem Messwandler.**

(57) Zum Einbau eines Meßwandlers (3), dessen Sekundärsystem auf einem Rohr (5) angeordnet ist, in das Kapselungsgehäuse (1) einer druckgasisolierten Hochspannungsschaltanlage mit zentrisch liegendem Leiter (2) weist das Kapselungsgehäuse (1) eine radial nach innen gerichtete Wand (13) und gegenüberliegend an mehreren Stellen des Umfangs Befestigungslaschen (15) auf. In der Wand (13) ist eine schiefe Ebene (14) vorgesehen. Die das Rohr (5) des Meßwandlers (3) seitlich begrenzenden Schutzelektroden (8) sind an den gleichen Stellen jeweils mit Durchgangslöchern (10) versehen, die über den Rücken (12) des Meßwandlers (3) hinausragen. In die Befestigungslaschen (15) des Kapselungsgehäuses (1) ist jeweils ein Stehbolzen (17) eingeschraubt, der die Durchgangslöcher (10) auf beiden Stirnseiten (6, 7) des Meßwandlers (3) durchsetzt und dessen Ende (18) gegen die schiefe Ebene (14) drückt.

EP 0 215 728 A1

# Beschreibung

## Metallgekapselte, druckgasisolierte Hochspannungsschaltanlage mit einem Meßwandler

Die Erfindung bezieht sich auf eine metallgekapselte, druckgasisolierte Hochspannungsschaltanlage mit einem im Kapselungsgehäuse zentrisch angeordneten, Hochspannung führenden Leiter, der Teil eines Meßwandlers ist, dessen Kern und Sekundärsystem auf einem Rohr angeordnet sind, das den Leiter mit Abstand umgibt und stirnseitig jeweils durch Schutzelektroden abgeschlossen ist, wobei am Meßwandler und am Kapselungsgehäuse an mehreren, längs des Umfangs verteilten Stellen einseitig Befestigungslaschen zur gegenseitigen Verschraubung und Spannvorrichtungen vorgesehen sind.

Eine derartige metallgekapselte, druckgasisolierte Hochspannungsschaltanlage mit Meßwandler ist aus der DE-OS 23 25 444 bekannt. Bei dem bekannten Meßwandler dient das innere Rohr nicht nur als Träger für die Kerne und Sekundärsysteme eines Stromwandlers, sondern bildet selbst, zusammen mit dem Leiter, den Oberspannungskondensator eines kapazitiven Spannungsteilers. Auf der einen Stirnseite des Meßwandlers ist die stirnseitige Schutzelektrode über isolierte Verbindungsglieder mit den Befestigungslaschen des Kapselungsgehäuses verschraubt. Auf der anderen Stirnseite sind entsprechende Stützelemente vorgesehen, die ein geringes Spiel zum Kapselungsgehäuse aufweisen. Außerdem sind zwischen den Kernen Druckstücke vorgesehen und Spannvorrichtungen, nämlich Gewindebolzen, die zwischen dem äußeren Druckstück und dem Stützelement liegen. Über sie wird eine axiale Verspannung der Meßwandlerteile gegen die Befestigung im Kapselungsgehäuse erzielt.

Da der Meßwandler während des Betriebes durch Schwingungen entsprechend der Netzfrequenz oder bei Transporten größeren Kräften ausgesetzt ist, besteht bei dieser bekannten Befestigungsweise die Möglichkeit, daß sich die Einbaulage des Meßwandlers im Kapselungsgehäuse unerwünscht verändert.

Der Erfindung liegt die Aufgabe zugrunde, eine Einbaumethode für den Meßwandler zu schaffen, die auch bei Rüttelbeanspruchungen die Einbaulage unverändert aufrechterhält.

Zur Lösung dieser Aufgabe weist bei einer metallgekapselten, druckgasisolierten Hochspannungsschaltanlage der eingangs beschriebenen Art gemäß der Erfindung das Kapselungsgehäuse auf der den Befestigungslaschen abgewandten Stirnseite des Meßwandlers eine radial nach innengerichtete, eine schiefe Ebene enthaltene Wand auf, am äußeren Umfang des Meßwandlers sind beidseitig, an den gleichen Stellen jeweils in einer Längsebene liegende, über den Rücken hinausragende Durchgangslöcher angeordnet, und jeweils ein in die Befestigungslasche des Kapselungsgehäuses eingeschraubter Stehbolzen durchsetzt diese Durchgangslöcher und drückt mit seinem Ende gegen die schiefe Ebene.

Die an mehreren längs des Umfanges verteilten Stellen vorgesehenen Stehbolzen führen über die Befestigungslaschen und die Durchgangsbohrungen beide Seiten des Wandlers und stützen sich außerdem fest gegen die schiefe Ebene der Kapselungswand ab, so daß die radiale Position des Meßwandlers eindeutig und unveränderlich festgelegt ist. Außerdem ist der Meßwandler über die Stehbolzen gegen die Flächen der Befestigungslaschen geschraubt und auch in seiner axialen Position festgelegt. Trotzdem liegt nur eine radiale und keine axiale Verspannung vor, so daß der nur einseitig axial festgelegte Meßwandler Wärmedehnungen nachgeben kann. Beide Seiten des Meßwandlers sind außerdem im Kapselungsgehäuse geerdet, da der Stehbolzen auf der einen Seite in der Befestigungslasche eingeschraubt ist und auf der anderen Seite mit der schiefen Ebene in galvanischen Kontakt steht. Diese Einbaumethode hat außerdem den Vorteil, daß nur eine Stirnseite des Meßwandlers für das Verschrauben der Stehbolzen zugänglich sein muß. Sie kann bei Spannungs- oder Stromwandlern mit ein oder mehreren Sekundärsystemen oder bei kombinierten Meßwandlern angewendet werden.

Es empfiehlt sich, daß die schiefe Ebene gegenüber der Stirnfläche des Meßwandlers einen spitzen Winkel bildet. Sie ist dadurch nach innen geneigt und erleichtert die radiale Festlegung des Meßwandlers, da die Kräfte nach innen gerichtet sind. Die schiefe Ebene kann auch Teil einer Nut, z. B. einer Dreiecksnut, in der radial gerichteten Wand des Kapselungsgehäuses sein. Dadurch kann die Einbaumethode gemäß der Erfindung auch nachträglich bei Kapselungsgehäusen vorgesehen werden, die eine nicht abgesetzte radial nach innen gerichtete Wand aufweisen.

Um bei dem Einsatz der erfindungsgemäßen Einbaumethode auch Wandler unterschiedlicher Länge bei einem gegebenen Abstand zwischen der schiefen Ebene und der Befestigungslaschen des Kapselungsgehäuses anwenden zu können, kann mit Vorteil die Befestigungslasche zum benachbarten Durchgangsloch einen Abstand aufweisen, der durch eine vom Stehbolzen durchsetzte Hülse überbrückt ist. Die Hülse ermöglicht dann die gleiche genaue Ausrichtung des Meßwandlers.

Weiterhin kann es zweckmäßig sein, daß die Durchgangslöcher in den Schutzelektroden liegen. In diesem Fall sind nur die Schutzelektroden eindeutig geerdet und das dazwischen liegende Rohr kann, wenn es gegen die Schutzelektroden isoliert wird, als Teil eines Oberspannungskondensators eines kapazitiven Spannungswandlers ausgenutzt werden.

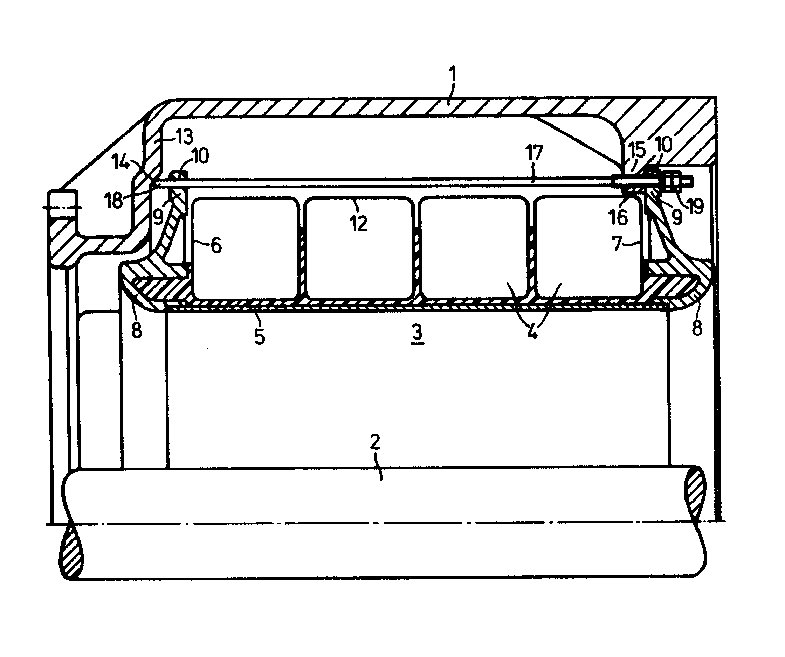

Im folgenden sei die Erfindung noch anhand des in der Figur dargestellten Ausführungsbeispiels näher erläutert. Die Figur zeigt einen Längsschnitt durch die Kapselung einer metallgekapselten, druckgasisolierten Hochspannungsschaltanlage mit einem Meßwandler.

Innerhalb des Kapselungsgehäuses 1 einer metallgekapselten, mit Druckgas, insbesondere SF₆, isolierten Hochspannungsschaltanlage in einphasiger Bauart, ist der Hochspannung führende Leiter 2 zentrisch angeordnet. Er ist Teil des ebenfalls im Kapselungsgehäuse 1 liegenden Meßwandlers 3 zur Erfassung des im Leiter 2 fließenden Stromes. Der Meßwandler 3 weist mehrere Sekundärsysteme 4 auf, die auf einem Rohr 5 angeordnet sind, das den Leiter 2 umgibt. Das Rohr 5 ist auf jeder Stirnseite 6 bzw. 7 des Meßwandlers 3 mit einer Schutzelektrode 8 versehen, die an mehreren, längs des Umfangs verteilten Stellen Augen 9 mit Durchgangslöchern 10 aufweisen. Jeweils ein Durchgangsloch 10 auf der Stirnseite 6 und ein Durchgangsloch 10 auf der Stirnseite 7 liegen auf der gleichen Längsebene. Sie ragen außerdem über den Rücken 12 der Sekundärsysteme 4 hinaus.

Zur Befestigung des Meßwandlers 3 im Kapselungsgehäuse 1 ist dieses auf der einen Seite mit einer radial nach innen gerichteten Wand 13 versehen, die in Höhe der Durchgangslöcher 10 eine schiefe Ebene 14 aufweist, die einen spitzen Winkel mit der Stirnfläche 6 des Meßwandlers 3 bildet. Außerdem sind am Kapselungsgehäuse 1 in einem Abstand, der angenähert der Länge des Meßwandlers 3 entspricht, an mehreren, längs des Umfangs verteilten Stellen, die denen der Durchgangslöcher 10 entsprechen, Befestigungslaschen 15 vorgesehen, die mit einer Gewindebohrung 16 versehen sind. In diese Gewindebohrung 16 ist jeweils ein Stehbolzen 17 eingeschraubt, der außerdem die auf der gleichen Längsebene liegenden beiden Durchgangslöcher 10 an den entgegengesetzten Stirnseiten 6, 7 des Meßwandlers 3 durchsetzt. Das Ende 18 des Stehbolzens 17 drückt dabei gegen die schiefe Ebene 14 und richtet den Meßwandler 3 in radialer Richtung aus.

Mit Hilfe der Muttern 19 werden außerdem die einander zugewandten Flächen des Auges 9 auf der Stirnseite 7 und der Befestigungslasche 15 aneinander zur Anlage gebracht. Dadurch ist auch die axiale Position des Meßwandlers 3 festgelegt, obwohl infolge des Abstandes der Schutzelektrode 8 von der Stirnwand 6 zu der radial nach innen gerichteten Wand 13 eine Wärmedehnung des Meßwandlers ohne Entstehung von Wärmespannungen möglich ist. Beide Seiten des Meßwandlers 3, d. h. insbesondere beide Schutzelektroden 8, sind durch den galvanischen Kontakt über den Stehbolzen 17 zum Kapselungsgehäuse 1 in diesem geerdet.

**Patentansprüche**

1. Metallgekapselte, druckgasisolierte Hochspannungsschaltanlage mit einem im Kapselungsgehäuse (1) zentrisch angeordneten, Hochspannung führenden Leiter (2), der Teil eines Meßwandlers (3) ist, dessen Kern und Sekundärsystem (4) auf einem Rohr (5) angeordnet sind, das den Leiter (2) mit Abstand umgibt und stirnseitig jeweils durch Schutzelektroden (8) abgeschlossen ist, wobei am Meßwandler (3) und am Kapselungsgehäuse (1) an mehreren, längs des Umfangs verteilten Stellen einseitig Befestigungslaschen (15) zur gegenseitigen Verschraubung und Spannvorrichtungen vorgesehen sind, **dadurch gekennzeichnet**, daß das Kapselungsgehäuse (1) auf der den Befestigungslaschen (15) abgewandten Stirnseite (6) des Meßwandlers (3) eine radial nach innen gerichtete, eine schiefe Ebene (14) enthaltende Wand (13) aufweist, daß am äußeren Umfang des Meßwandlers (3) beidseitig, an den gleichen Stellen jeweils in einer Längsebene liegende, über den Rücken (12) hinausragende Durchgangslöcher (10) angeordnet sind und daß jeweils ein in die Befestigungslasche (15) des Kapselungsgehäuses (1) eingeschraubter Stehbolzen (17) diese Durchgangslöcher (10) durchsetzt und mit seinem Ende (18) gegen die schiefe Ebene (14) drückt.

2. Metallgekapselte, druckgasisolierte Hochspannungsschaltanlage nach Anspruch 1, **dadurch gekennzeichnet**, daß die schiefe Ebene (14) gegenüber der Stirnfläche (6) des Meßwandlers (3) einen spitzen Winkel bildet.

3. Metallgekapselte, druckgasisolierte Hochspannungsschaltanlage nach Anspruch 1 oder 2, **dadurch gekennzeichnet**, daß die schiefe Ebene (14) Teil einer Nut in der radial gerichteten Wand (13) des Kapselungsgehäuses (1) ist.

4. Metallgekapselte, druckgasisolierte Hochspannungsschaltanlage nach Anspruch 1, **dadurch gekennzeichnet**, daß die Durchgangslöcher (10) in den Schutzelektroden (8) liegen.

5. Metallgekapselte, druckgasisolierte Hochspannungsschaltanlage nach Anspruch 1 oder einen oder mehrere der Ansprüche 2 bis 4, **dadurch gekennzeichnet**, daß die Befestigungslaschen (15) zum benachbarten Durchgangsloch (10) einen Abstand aufweisen, der durch eine vom Stehbolzen (17) durchsetzte Hülse überbrückt ist.

85 P 4078

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-B-1 030 446 (N.V. COQ)<br>* Spalte 1, Zeile 38 - Spalte 2, Zeile 50 * | 1 | H 01 F 40/06<br>H 01 F 27/06 |
| | --- | | |
| A | DE-A-1 488 796 (BROWN BOVERI)<br>* Seite 2, letzter Absatz; Seite 3, Absatz 1 * | 1 | |
| | --- | | |
| A | DE-A-2 409 990 (SIEMENS) | | |
| | --- | | |
| A | DE-B-1 243 776 (SIEMENS) | | |
| | ----- | | |

**RECHERCHIERTE SACHGEBIETE (Int. Cl.4)**

H 01 F 40/00
H 01 F 27/00
H 01 F 31/00

Der vorliegende Recherchenbericht wurde für alle Patentansprüche erstellt.

| Recherchenort | Abschlußdatum der Recherche | Prüfer |
|---|---|---|
| DEN HAAG | 03-12-1986 | VANHULLE R. |